# EUROPÄISCHE PATENTSCHRIFT

(11) **EP 2 000 569 B1**
(45) Veröffentlichungstag und Bekanntmachung des Hinweises auf die Patenterteilung: **18.05.2011**
(21) Anmeldenummer: 08157546.6
(22) Anmeldetag: 04.06.2008
(51) Int. Cl.: D04H 11/08, D04H 13/00, A47L 13/16, A47L 13/20

(54) **Verwendung eines strukturierten mehrschichtigen Vliesstoffs**
Use of a structured multi-layer non-woven material
Utilisation d` un Tissu non tissé multicouche structuré

(30) Priorität: 04.06.2007 DE 102007026019; 13.09.2007 DE 102007043566
(43) Veröffentlichungstag der Anmeldung: 10.12.2008
(73) Patentinhaber: VERMOP Salmon GmbH, 82205 Gilching (DE)
(72) Erfinder: Salmon, Dirk, 82205, Gilching (DE)
(74) Vertreter: HOFFMANN EITLE

(56) Entgegenhaltungen:
- EP-A- 0 166 060
- EP-A- 0 888 743
- WO-A-2006/056674
- US-A- 4 211 593
- US-A- 5 804 007

## Beschreibung

Die vorliegende Erfindung betrifft einen strukturierten mehrschichtigen Vliesstoff zur Flächenreinigung und ein Verfahren zur Herstellung desselben.

### Stand der Technik

Üblicherweise bestehen Vliesstoffe zum Zweck der Reinigung aus fadenförmigen Materialien, die durch spezielle textile Herstellungsverfahren in Flächen ausgebildet werden. Diese Flächen können eine polförmige Oberflächenstruktur mit Zonen verschiedener Fasern und/oder Faserausrichtungen aufweisen. Im Stand der Technik werden solche Zonen oder Pole aus geschlossenen und/oder geschnittenen Fadenschlingen gebildet. Die Herstellung dieser Strukturen erfordert eine Reihe von Verfahrensschritten.

Ein bekanntes Verfahren zur Verbundherstellung und Oberflächenausbildung nutzt das mechanische Vernadeln unter Zuhilfenahme von speziellen Nadeln und ein, im Vergleich zum klassischen Prinzip der Vliesstoffverfestigung, durch den Faseraustrag in ein mitlaufendes Bürstenband modifiziertes Verfahren. Bekannt ist der Einsatz von Faservliesstoffen mit einer auf einer Oberfläche ausgebildeten durchgehenden Faserpolschicht im großtechnischen Maßstab als textiler Bodenbelag im Objekt- und Privatbereich sowie als textiles Auskleidungs- und Kaschiermaterial im Automobilbau.

Die DD-PS 39 819 beschreibt ein einschichtiges Polvlies-Nähgewirke, bei dem die Fasern des Faservlieses in Form von Schlingen in eine vorgefertigte Trägerbahn eingebunden sind. Die im Sinne der Erfindung strukturierte Oberfläche wird hier durch Rauhen und Scheren erreicht

Aus der DD-PS 159 353 ist ein Erzeugnis bekannt, bei dem aus Flor- bzw. Polstoffen durch Widerhakennadeln Fasern aus dem bereits vorhandenen Pol bzw. Flor durch eine textile Trägerbahn hindurch ausgetragen werden und auf der Rückseite dieser Trägerbahn ebenfalls eine Polschicht ausbilden.

In der DD-PS 85141 wird zur Verbundausbildung nach der DD-PS 159 353 die Verwendung einer Trägerbahn beschrieben, die aus einem durch Wirknadeln fadenlos verfestigten Vlies-Nähgewirke besteht, aus welchem ebenfalls Fasern zur Herausbildung einer flauschigen Oberfläche beitragen können.

In der DE 101 39 842 wird ein Schlingenteil für Klettverbindungen beschrieben, bei dem durch die Anwendung eines Teils des der vorliegenden Erfindung zugrunde liegenden mechanischen Veredelungsverfahrens auf einem mittels Faser- oder Fadenmaschen verfestigten Vliesstoff durch den Austrag einer Faserpolschicht eine veloursartige Oberfläche in hoher Dichte, Parallelität und gleichmäßiger Höhe ausgebildet wird.

Die DE 101 39 841 beschreibt die Herstellung eines Textilrückens für Teppichböden, bei dem in gleicher Weise aus einem durch Faser- oder Fadenmaschen verfestigten Vliesstoff eine Faserpolschicht mit hoher Dichte und Höhengleichmäßigkeit ausgebildet wird.

Die US 5,804,007 A beschreibt ein Herstellungsverfahren für Faserstoffe mit zwei Polschichten, die mittels Nadel-Vorgängen ausgetragen werden. Die Zweiteilung des Anspruchs 1 erfolgt gegen diese US-Schrift. Ähnliche Vliesstoffe und Verfahren sind in der US 4,211,593 A und EP 0 166 060 A2 offenbart.

### Darstellung der Erfindung

Der Erfindung liegt die Aufgabe zugrunde, einen mehrschichtigen Vliesstoff zu schaffen, der sich besonders für die Nassreinigung von großen Flächen eignet und mit einem einfachen Verfahren herstellbar ist, und ein Verfahren zur Herstellung desselben anzugeben.

Diese Aufgabe wird durch die im Anspruch 1 beschriebenen Merkmale gelöst. Weitere vorteilhafte Ausführungsbeispiele sind in den Unteransprüchen beschrieben.

Danach ist ein strukturierter mehrschichtiger Flächenreinigungsvliesstoff, umfassend wenigstens zwei Arten von sich zumindest in ihrer Materialzusammensetzung unterscheidenden Faservliesstoffkomponenten, dadurch gekennzeichnet, dass Faserteile aus einer ersten Faservliesstoffkomponente im Wesentlichen senkrecht aus einer Oberfläche des Flächenreinigungsvliesstoffs herausgearbeitet sind und eine erste Faserpolkomponente ausbilden, und Faserteile aus der zweiten Vliesstoffkomponente ebenfalls im Wesentlichen senkrecht aus derselben Oberfläche herausgearbeitet sind und eine zweite Faserpolkomponente ausbilden. Die erfindungsgemäße Lösung stellt eine textile Fläche zur Flächenreingung bereit, bei der aus einem mehrschichtigen Grundmaterial eine Faserpolschicht mit definierter Dichte, Struktur und einer auf die Anwendungsfälle Wasseraufnahme, Schmutzaufnahme und Gleitfähigkeit optimal abgestimmten Faserstoffzusammensetzung entsteht und diese Polschicht in einer für den Verwendungszweck ausreichender Festigkeit in den Basismaterialien eingebunden ist. Es ist möglich, die Faserteile aus beiden den Verbund bildenden Flächenreinigungsvliesstoffen gleichzeitig und vollflächig auszubilden oder eine punkt- oder streifenförmige Musterung der jeweils aus den einzelnen Verbundkomponenten ausgetragenen Faserteile zu realisieren. Eine solche Oberfläche ist zum Reinigung von Flächen vorzugsweise im nassen aber auch im trockenen Zustand geeignet.

Die erste Faserpolkomponente ist dabei aus schmutzaufnehmenden und das Gleitverhalten positiv beeinflussenden Faserteilen ausgebildet. Im vorliegenden Fall eines Aufbaus mit zwei Polstrukturen kann eine erste Faserpolkomponente die obige Doppelfunktion übernehmen. Es ist aber möglich, mehr als zwei Polstrukturen aufzunehmen, deren Strukturen, Größen, Faserzusammensetzungen usw. hinsichtlich der zu übernehmenden Funktionalität optimiert sind.

Ferner ist die zweite Faserpolkomponente aus Feuchtigkeit speichernden Polschichtanteilen gebildet. Mithilfe einer solchen Faserpolkomponente eignet sich der Vliesstoff besonders für eine Nassreinigung von Flächen. Die konkrete Ausbildung der Polstruktur kann hierbei beispielsweise hinsichtlich der zu reinigenden Materialien oder hinsichtlich des Bedarfs zum Speichern von Wasser optimiert werden.

Vorzugsweise bildet die erste Faservliesstoffkomponente einen Nadelvliesstoff, der aus einer Mischung von ungefähr 25 % Polyesterfasern 13 dtex, ungefähr 50 % Viskosefasern 8,9 dtex und ungefähr 15 % Schmelzklebefasern 4,4 dtex besteht. Es hat sich herausgestellt, dass ein Vliesstoff mit einer ersten Fliesstoffkomponente der obigen Zusammensetzung die vorliegende Aufgabe besonders gut löst und wirtschaftlich herstellbar ist.

Vorzugsweise bildet die zweite Faservliesstoffkomponente einen Nadelvliesstoff, der aus einer Mischung von ungefähr 85 % vorzugsweise farbigen Viskosefasern 1,7 dtex und ungefähr 15 % Schmelzklebefasern 4,4 dtex besteht. Es hat sich herausgestellt, dass ein Vliesstoff mit einer zweiten Fliesstoffkomponente der obigen Zusammensetzung die vorliegende Aufgabe besonders gut löst und wirtschaftlich herstellbar ist.

Vorzugsweise ist die zweite Faserpolkomponente kürzer als die erste Faserpolkomponente. Die Verunreinigung und Abnutzung der zur Speicherung von Feuchtigkeit optimierten zweiten Polstruktur wird auf diese Weise verringert. Ihre Funktionalität bleibt daher länger erhalten.

Vorzugsweise liegt die Höhe der ersten Faserpolkomponente im Bereich von 5 mm bis 7 mm und der zweiten Faserpolkomponente im Bereich von 3 mm bis 5 mm. Zum einen erfüllen die gegebenen Bereiche die obige Forderung, nach der die zweite Faserkomponente vorzugsweise kürzer als die erste ist, und zum anderen stellen die gegeben Längenangaben einen guten Kompromiss aus Materialbedarf, Schmutzaufnahme, Gleitfähigkeit und Feuchtigkeitsspeicherung dar.

Vorzugsweise erfolgt die Anordnung der zweiten Faserpolkomponente in einem regelmäßigen, wiederkehrenden Muster. Eine solche Regelmäßigkeit ist wünschenswert, um eine homogene Reinigungswirkung des Stoffes sicher zu stellen. Ferner kann eine geeignete Musterung den Wiedererkennungswert des Produktes erhöhen und damit einen Beitrag zur Bekämpfung einer unerlaubten Herstellung und eines Vertriebs von Plagiaten leisten.

Vorzugsweise weisen die erste und zweite Faservliesstoffkomponente unterschiedliche Farben auf. Der Effekt der Musterung wird verstärkt, wenn die Faservliesstoffkomponenten in unterschiedlichen Farben ausgeführt sind.

Vorzugsweise ist die Faserausrichtung der Faservliesstoffkomponenten zur Faserausrichtung der Faserpolkomponenten im Wesentlichen senkrecht, wobei die Fasern der Polkomponenten noch mit wenigstens einem Ende in den Faservliesstoffkomponenten verankert sind. Eine Verankerung ist wünschenswert, um den Stoff haltbar und verschleißbeständig zu machen. Die Fasern bleiben in dem Vliesstoff befestigt. Folglich bleiben die Polstrukturen und damit die Reinigungswirkung des Stoffes erhalten. Die senkrechte Ausbildung ist vorteilhaft, um dem Stoff keine bevorzugte Reinigungsrichtung aufzuprägen. Ferner lässt sich ein solcher Vliesstoff einfach herstellen.

Die Aufgabe wird ferner durch eine Verwendung eines strukturierten mehrschichtigen Flächenreinigungsvliesstoffes zur Nassreinigung von Flächen, der gemäß dem folgenden Verfahren zur Herstellung von Flächenreinigungsvliesstoffen hergestellt ist, wobei der Flächenreinigungsvliesstoff wenigstens zwei Arten von sich zumindest in ihrer Materialzusammensetzung unterscheidenden Faservliesstoffkomponenten umfasst, gelöst, wobei das Verfahren die Schritte umfasst:
a) Austragen einer ersten Faserpolkomponente aus einer ersten Faservliesstoffkomponente, um eine erste Faserpolkomponente auszubilden;
b) Austragen einer zweiten Faserpolkomponente aus einer zweiten Faservliesstoffkomponente, um eine zweite Faserpolkomponente auszubilden; wobei das Austragen der verschiedenen Faserarten mittels eines Nadelungsverfahrens erfolgt. Hierbei können Nadeln verschiedener Eigenschaften verwendet werden. Ein solches Verfahren ermöglicht die Herstellung eines Flächenreinigungsvliesstoffes mit den oben genannten Eigenschaften und Vorteilen. Das Verfahren ist einfach durchführbar und kostengünstig. Eine wirtschaftliche Herstellung ist mithilfe dieses Verfahrens möglich.

Vorzugsweise kommen mindestens zwei hintereinander angeordnete Nadelmaschinen zum Einsatz, wobei die zwei Faservliesstoffkomponenten nacheinander ausgetragen werden. Es kann beispielsweise dann vorteilhaft sein, zwei Nadelmaschinen zu verwenden, wenn solche Maschinen bereits durch die Herstellung anderer Vliesstoffe, beispielsweise einkomponentiger Vliesstoffe, vorhanden sind. Die Anschaffung einer Nadelmaschine mit Nadelbrettern zweier oder mehrerer verschiedener Nadeln kann dabei vermieden werden. Es kann ferner wünschenswert sein, die Polausbildungsschritte der beiden Polkomponenten nacheinander an zwei Nadelmaschinen und nicht gleichzeitig an einer vorzusehen, wenn die gewünschte Ausbildung der zweiten Polkomponente die bereits korrekte Ausrichtung der Fasern der ersten Polkomponente voraussetzt oder zumindest begünstigt.

Vorzugsweise kommt eine einzige Nadelmaschine zum Einsatz, wobei die beiden Faservliesstoffkomponenten zeitgleich ausgetragen werden. Eine gleichzeitige Ausbildung der Polkomponenten beschleunigt das Verfahren und erhöht damit die Produktivität.

Vorzugsweise werden für das Austragen der ersten Faservliesstoffkomponente Gabelnadeln verwendet, wobei die Breite und die Tiefe der Gabelöffnungen der Nadeln etwa 0,05 mm, die Durchstichtiefe etwa 7 mm und Einstichdichte etwa 800 bis 900 Einstiche je cm² beträgt. Eine Anordnung solcher Gabelnadeln erlaubt die Herstellung einer obigen ersten Faservliesstoffkomponente.

Vorzugsweise werden für das Austragen der zweiten Faservliesstoffkomponente Kranznadeln mit einer Durchstichtiefe von etwa 3 mm bis 5 mm, vorzugsweise 4 mm, verwendet. Eine Anordnung solcher Gabelnadeln erlaubt die Herstellung einer obigen zweiten Faservliesstoffkomponente.

Vorzugsweise wird der Vliesstoff während des Verfahrens mit einer Vorschubgeschwindigkeit von etwa 1,5 m/min bis 3,5 m/min, vorzugsweise 2,5 m/min, bewegt, wobei die ausgetragenen Faserteile der ersten Faservliesstoffkomponente in ihrer senkrechten Position von einer Faserhaltevorrichtung, beispielsweise einem Bürstenband, welche sich mit gleicher Vorschubgeschwindigkeit bewegt, temporär fixiert werden. Das Fixieren der Fasern mittels eines Bürstenbandes ermöglicht die Herstellung einer reproduzierbaren Oberfläche, mit gleich bleibender Qualität.

### Kurze Beschreibung der Zeichnungen

Die Erfindung wird nachstehend anhand von Ausführungsbeispielen beschrieben. Die dazugehörigen Zeichnungen zeigen in
Fig. 1 den schematischen Querschnitt der Vliesstoffstruktur einer ersten Ausführungsform der vorliegenden Erfindung, die aus einer ersten Faservliesstoffkomponente besteht, durch die hindurch Faserteile einer nachträglich aufgebrachten zweiten Faservliesstoffkomponente in partieller Pfropfenform auf die bereits mit einer Polschicht versehene Oberfläche ausgetragen sind,
Fig. 2 den schematischen Querschnitt der Vliesstoffstruktur einer weiteren Ausführungsform der Erfindung, die aus einer ersten Faservliesstoffkomponente und einer zweiten Faservliesstoffkomponente besteht, aus der Faserteile in eine gemeinsame vollflächige Polschicht ausgetragen sind,
Fig. 3 den schematischen Querschnitt der Vliesstruktur aus nur einer Vliesstoffkomponente, in der sowohl eine erste Faserart als auch eine zweite Faserart enthalten sind und aus der Faserteile aller Faserarten in einer vollflächigen Polschicht einheitlicher Höhe ausgetragen sind.

### Wege zur Ausführung der Erfindung

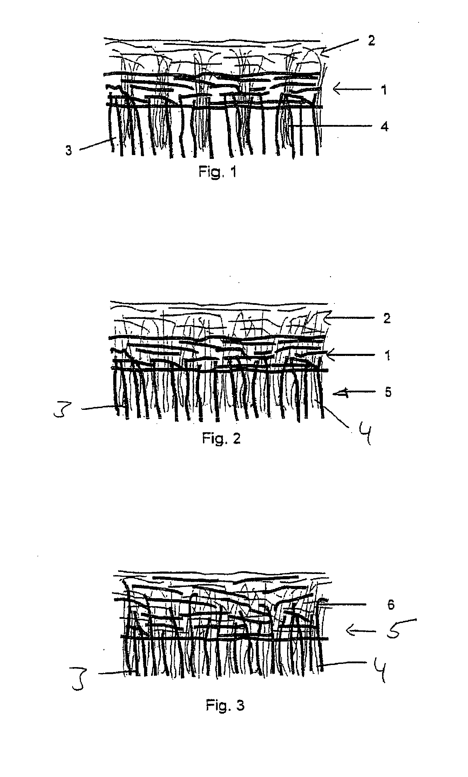

Die erfindungsgemäße Vliesstoffstruktur gemäß einer ersten Ausführungsform besteht, wie es in Fig. 1 dargestellt ist, aus zwei hinsichtlich der enthaltenen Faserstoffe unterschiedlichen, vorgefertigten Faservliesstoffkomponenten 1 und 2. Die Faservliesstoffkomponente 1 bildet einen Nadelvliesstoff, der zuvor aus einer Mischung von vorzugsweise 25 % Polyesterfasern 13 dtex, 50 % Viskosefasern 8,9 dtex und 15 % Schmelzklebefasern 4,4 dtex mit einer Flächenmasse von 200 g/m² hergestellt wurde. Die Faservliesstoffkomponente 2 ist ein Nadelvliesstoff, der aus einer Mischung von 85 % vorzugsweise farbigen Viskosefasern 1,7 dtex und 15 % Schmelzklebefasern 4,4 dtex mit einer Flächenmasse von 200 g/m² hergestellt wird. Ebenso sind andere Faserzusammensetzungen möglich. Vorzugsweise ist die Materialzusammensetzung so gewählt, dass die erste Faservliesstoffkomponente geeignet ist, eine erste Polschicht aus schmutzaufnehmenden und das Gleitverhalten positiv beeinflussenden Faserteilen auszubilden und die zweite Faservliesstoffkomponente geeignet ist, eine zweite Polschicht aus feuchtigkeitsspeichernden Polschichtanteilen auszubilden.

Eine Faserpolkomponente 3 wird durch senkrechten Austrag von Faserteilen der in der Faservliesstoffkomponente 1 enthaltenen Faserstoffe mittels Gabelnadeln bei einer Einstichtiefe von etwa 7,0 mm auf einer Oberfläche in vollflächiger Art und Weise ausgebildet. Die Höhe dieser Faserpolschicht liegt vorzugsweise zwischen 5 und 7 mm. Faserteile aus der Faservliesstoffkomponente 2 werden mittels Kronennadeln von der Rückseite der Faservliesstoffkomponente 1 durch diese hindurch als partielle Faserpolkomponente 4 mit einer Höhe von 4 mm partiell und in Pfropfenform ausgetragen.

Die Anordnung der pfropfenförmigen Polkomponente 4 erfolgt in einem regelmäßig wiederkehrenden Muster. Vorzugsweise ist das Muster punktförmig ausgebildet. Der Effekt der Musterung wird verstärkt, wenn die Faservliesstoffkomponenten in unterschiedlichen Farben ausgeführt sind. So kann durch die unterschiedliche Farbgebung der Fasevliesstoffkomponente 1, beispielsweise grau, und der Faservliesstoffkomponete 2, beispielsweise gelb, einen hoher Wiedererkennungswert des Produktes entstehen.

Das zur Ausbildung einer Faserpolschicht durch den Austrag von Faserteilen aus einem Faservliesstoff verwendete Verfahren wird als Velourisieren bezeichnet. Eine Vielzahl von Nadeln durchsticht dazu den Faservliesstoff senkrecht. Je nach Ausführung sind entweder Nadeln mit rundem Querschnitt an der Spitze mit einer als Gabel bezeichneten Einkerbung versehen, oder Nadeln mit drei- oder vierkantigem Querschnitt sind im kurzen Abstand von der Nadelspitze mit kranzförmig in alle oder ausgewählte Kanten eingebrachten widerhakenförmigen Kerben ausgestattet. Die Größe der Gabelöffnung bzw. der Kerben wird nach dem Durchmesser der im Nadelvliesstoff verwendeten Fasern ausgewählt. Damit wird gewährleistet, dass sich in der Ebene des Faservliesstoffes befindliche Fasern von den Gabeln bzw. den Haken der durchstechenden Nadeln erfasst werden, aus dem Vliesstoff heraus getragen werden und die senkrecht zum Vliesstoff abstehenden Polkomponenten 3 bzw. 4 ausgebildet werden. Dabei wird die Höhe dieser Austragsbewegung so gewählt dass die Faser noch mit wenigstens einem Ende im Faservliesstoff verankert bleibt.

Bei der in Fig. 1 dargestellten Struktur kommt ein zweistufiges Verfahren unter Verwendung von zwei hintereinander angeordneten Nadelmaschinen zur Anwendung. In dem ersten Verfahrensschritt wird die Faserpolkomponente 3 aus der Faservliesstoffkomponente 1 ausgetragen. Dazu werden vorzugsweise Gabelnadeln der Feinheit 42 gg verwendet, deren Gabelöffnung mit einer Breite von ca. 0,05 mm und einer Tiefe von ca. 0,05 mm auf die Fasern des Vliesstoffes 1 abgestimmt ist. Die Tiefe des Durchstiches beträgt ca. 7 mm und ergibt die Höhe der Faserpolschicht 3 mit ca. 5 mm. Einen hohen und dichten Faseraustrag in die Polschicht realisieren die mit einer Einstichdichte von 800 bis 900 Einstichen je cm² einstechenden Nadeln. Während die Nadeln ihre Rückwärtsbewegung ausführen, ist es von Vorteil, wenn die ausgetragenen Faserteile in ihrer senkrechten Position in einem Bürstenband, welches sich in gleicher Vorschubgeschwindigkeit von vorzugsweise 2,50 m/min mit dem Material bewegt, temporär fixiert werden.

Im Anschluss an den ersten Verfahrensschritt wird die Faservliesstoffkomponente 2 auf die nicht velourisierte Rückseite der Faservliesstoffkomponente 1 aufgelegt, wobei die Polschicht 3 über den gesamten Prozess im Bürstenband fixiert bleibt. Eine zweite Nadelmaschine trägt nun die Faserpolkomponente 4 mit so genannten Kranznadeln und einer Durchstichtiefe von 4 mm aus dem Faservliesstoff 2 aus. Deren Spitzen können sich den Weg durch die bereits verfestigte Faservliesstoffkomponente 1 bahnen und mit den in ca. 3 mm von der Spitze auf jeder der drei Kanten des Arbeitsteiles der Nadel angebrachten Widerhaken mit einer der Faserquerschnitt angepassten Tiefe die feinen Fasern durch die Komponente 1 hindurch transportieren und auf der bereits mit der Faserpolkomponente 3 versehenen Außenseite die Faserpolkomponente 4 mit einer Höhe von 3 bis 5 mm ausbilden. Die Kranznadel muss abgestimmt auf die gewünschte Polhöhe aus der gegenüberliegenden Oberfläche des Vliesstoffes 1 herausstechen, um eine Faserpolhöhe von 3 bis 5 mm zu realisieren. Durch spezielle Gestaltung der Benadelung und des Verhältnisses zwischen Materialvorschub und Nadelhubfrequenz in der für den zweiten Verfahrensschritt verwendeten Nadelmaschine wird die pfropfenförmige und partielle Ausbildung der Faserpolkomponente 4 erreicht. Es entsteht ein punktförmiges Muster. Möglich sind aber auch streifen-, rasterförmige oder andere Musterungen.

Gemäß einer weiteren Ausführungsform ist in Fig. 2 eine Struktur dargestellt, zu deren Ausbildung beide Faservliesstoffkomponenten 1 und 2 gleichzeitig einer die Faserpole ausbildenden Nadelmaschine zugeführt werden. Faserteile aus beiden Faservliesstoffkomponenten werden zeitgleich in die Faserpolschicht 5 ausgetragen. Die Feinheit der verwendeten Nadeln ist auf die veränderten Verhältnisse hinsichtlich der unterschiedlich im Material enthaltenen Faserdurchmesser abgestimmt. Werden Kranznadeln mit der Feinheit von ca. 36 gg eingesetzt, werden überwiegend grobe Polyesterfasern und wenige feine Viskosefasern in die Faserpolschicht ausgetragen. Dadurch wird die Gleitfähigkeit der fertigen textilen Struktur im vorgesehenen nassen Zustand gewährleistet.

Fig. 3 zeigt ein einfaches Ausführungsbeispiel, bei dem alle ursprünglich in den Faservliesstoffkomponenten 1 und 2 enthaltenen Faserstoffe gemeinsam in einem Faservliesstoff 6 mit entsprechender Flächenmasse zu vergleichbaren Anteilen enthalten sind. In diesem Fall durchdringen sich die beiden Faservliesstoffkomponenten. Auch hier ist zur Ausbildung der Polschichten nur eine Nadelmaschine notwendig. Durch die Verwendung der unter Fig. 2 beschriebenen Kranznadeln, können grobe Polyesterfasern in einem größeren Anteil als die feineren Viskosefasern gezielt zur Ausbildung der Gleitschicht ausgearbeitet werden. Die Polhöhe beträgt vorzugsweise 5 mm.

Es sei ausdrücklich darauf hingewiesen, dass die oben beschriebenen Verfahren auch an Vliesstoffen mit mehr als zwei Vliesstoffkomponenten durchgeführt werden können, um Vliesstoffe mit beispielsweise drei oder mehr Polkomponenten herzustellen. Die verschiedenen Fasereigenschaften und Polstrukturen können dabei verschiedene Funktionen erfüllen, wie es oben für den Fall mit zwei Komponenten ausführlich beschrieben ist.

## Patentansprüche

1. Verwendung eines strukturierten mehrschichtigen Flächenreinigungsvliesstoffes, zur Nassreinigung von Flächen, wobei der Flächenreinigungsvliesstoff wenigstens zwei Arten von sich zumindest in ihrer Materialzusammensetzung unterscheidenden Faservliesstoffkomponenten (1, 2), umfasst, wobei
Faserteile aus einer ersten Faservliesstoffkomponente (1) im Wesentlichen senkrecht aus einer Oberfläche des Flächenreinigungsvliesstoffs herausgearbeitet sind und eine erste Faserpolkomponente (3) ausbilden, und
Faserteile aus der zweiten Vliesstoffkomponente (2) ebenfalls im Wesentlichen senkrecht aus derselben Oberfläche herausgearbeitet sind und eine zweite Faserpolkomponente (4) ausbilden,
**dadurch gekennzeichnet, dass**
die erste Faserpolkomponente (3) aus Schmutz aufnehmenden und das Gleitverhalten positiv beeinflussenden Faserteilen ausgebildet ist, und
die zweite Faserpolkomponente (4) aus Feuchtigkeit speichernden Polschichtanteilen gebildet ist.

2. Verwendung eines strukturierten mehrschichtigen Flächenreinigungsvliesstoffes nach Anspruch 1, **dadurch gekennzeichnet, dass** die erste Faservliesstoffkomponente (1) einen Nadelvliesstoff bildet, der aus einer Mischung von ungefähr 25 % Polyesterfasern 13 dtex, ungefähr 50 % Viskosefasern 8,9 dtex und ungefähr 15 % Schmelzklebefasern 4,4 dtex besteht.

3. Verwendung eines strukturierten mehrschichtigen Flächenreinigungsvliesstoffes nach einem der vorhergehenden Ansprüche, **dadurch gekennzeichnet, dass** die zweite Faservliesstoffkomponente (2) einen Nadelvliesstoff bildet, der aus einer Mischung von ungefähr 85 % vorzugsweise farbigen Viskosefasern 1,7 dtex und ungefähr 15 % Schmelzklebefasern 4,4 dtex besteht.

4. Verwendung eines strukturierten mehrschichtigen Flächenreinigungsvliesstoffes nach einem der vorhergehenden Ansprüche, **dadurch gekennzeichnet, dass** die zweite Faserpolkomponente (4) kürzer als die erste Faserpolkomponente ist.

5. Verwendung eines strukturierten mehrschichtigen Flächenreinigungsvliesstoffes nach einem der vorhergehenden Ansprüche, **dadurch gekennzeichnet, dass** die Höhe der ersten Faserpolkomponente (3) im Bereich von 5 mm bis 7 mm und der zweiten Faserpolkomponente (4) im Bereich von 3 mm bis 5 mm liegt.

6. Verwendung eines strukturierten mehrschichtigen Flächenreinigungsvliesstoffes nach einem der vorhergehenden Ansprüche, **dadurch gekennzeichnet, dass** die Anordnung der zweiten Faserpolkomponente (4) in einem regelmäßigen, wiederkehrenden Muster erfolgt.

7. Verwendung eines strukturierten mehrschichtigen Flächenreinigungsvliesstoffes nach einem der vorhergehenden Ansprüche, **dadurch gekennzeichnet, dass** die erste und zweite Faservliesstoffkomponente (1, 2) unterschiedliche Farben aufweisen.

8. Verwendung eines strukturierten mehrschichtigen Flächenreinigungsvliesstoffes nach einem der vorherigen Ansprüche, **dadurch gekennzeichnet, dass** die Faserausrichtung der Faservliesstoffkomponenten (1, 2) zur Faserausrichtung der Faserpolkomponenten (3, 4) im Wesentlichen senkrecht ist, wobei die Fasern der Polkomponenten noch mit wenigstens einem Ende in den Faservliesstoffkomponenten verankert sind.

9. Verwendung eines strukturierten mehrschichtigen Flächenreinigungsvliesstoffes zur Nassreinigung von Flächen, wobei der Flächenreinigungsvliesstoff wenigstens zwei Arten von sich zumindest in ihrer Materialzusammensetzung unterscheidenden Faservliesstoffkomponenten (1, 2) umfasst und nach einem Verfahren umfassend die folgenden Schritte hergestellt wird:
a) Austragen einer ersten Faserpolkomponente (1) aus einer ersten Faservliesstoffkomponente, um eine erste Faserpolkomponente (3) auszubilden, die aus schmutzaufnehmenden und das Gleitverhalten positiv beeinflussenden Faserteilen ausgebildet ist;
b) Austragen einer zweiten Faserpolkomponente (2) aus einer zweiten Faservliesstoffkomponente, um eine zweite Faserpolkomponente (4) auszubilden, die aus feuchtigkeitsspeichernden Polschichtanteilen gebildet ist; wobei
das Austragen der verschiedenen Faserarten mittels eines Nadelungsverfahrens erfolgt.

10. Verwendung eines strukturierten mehrschichtigen Flächenreinigungsvliesstoffes nach Anspruch 9, **dadurch gekennzeichnet, dass** mindestens zwei hintereinander angeordnete Nadelmaschinen zum Einsatz kommen und die zwei Faservliesstoffkomponenten (1, 2) nacheinander ausgetragen werden.

11. Verwendung eines strukturierten mehrschichtigen Flächenreinigungsvliesstoffes nach Anspruch 9, **dadurch gekennzeichnet, dass** eine einzige Nadelmaschine zum Einsatz kommt, wobei die beiden Faservliesstoffkomponenten (1, 2) zeitgleich ausgetragen werden.

12. Verwendung eines strukturierten mehrschichtigen Flächenreinigungsvliesstoffes nach einem der Ansprüche 9 bis 11, **dadurch gekennzeichnet, dass** für das Austragen der ersten Faservliesstoffkomponente (1) Gabelnadeln verwendet werden, wobei die Breite und die Tiefe der Gabelöffnungen der Nadeln etwa 0,05mm, die Durchstichtiefe etwa 7 mm und Einstichdichte etwa 800 bis 900 Einstiche je cm² beträgt.

13. Verwendung eines strukturierten mehrschichtigen Flächenreinigungsvliesstoffes nach Anspruch einem der Ansprüche 9 bis 12, **dadurch gekennzeichnet, dass** für das Austragen der zweiten Faservliesstoffkomponente (2) Kranznadeln mit einer Durchstichtiefe von etwa 3 mm bis 5 mm, vorzugsweise 4 mm, verwendet werden.

14. Verwendung eines strukturierten mehrschichtigen Flächenreinigungsvliesstoffes nach einem der Ansprüche 9 bis 13, **dadurch gekennzeichnet, dass** der Flächenreinigungsvliesstoff während des Verfahrens mit einer Vorschubgeschwindigkeit von etwa 1,5 m/min bis 3,5 m/min, vorzugsweise 2,5 m/min, bewegt wird, wobei die ausgetragenen Faserteile der ersten Faservliesstoffkomponente (1) in ihrer senkrechten Position von einer Faserhaltevorrichtung, wie beispielsweise einem Bürstenband, welche sich mit gleicher Vorschubgeschwindigkeit bewegt, temporär fixiert werden.

## Claims

1. Use of a structured multi-layer surface-cleaning non-woven fabric for wet cleaning of surfaces, wherein the surface-cleaning non-woven fabric comprises at least two types of fibre non-woven fabric components (1, 2) which differ at least as regards their material composition, wherein fibre parts made from a first fibre non-woven fabric component (1) are brought out essentially vertically from a surface of the surface-cleaning non-woven fabric and form a first fibre pile component (3), and fibre parts made from the second non-woven fabric component (2) are likewise brought out essentially vertically from the same surface and form a second fibre pile component (4), **characterised in that** the first fibre pile component (3) is formed from dirt-absorbing fibre parts which positively influence the gliding behaviour, and the second fibre pile component (4) is formed from moisture-storing pile layer portions.

2. Use of a structured multi-layer surface-cleaning non-woven fabric according to claim 1, **characterised in that** the first fibre non-woven fabric component (1) forms a needled non-woven fabric which consists of a mixture of approximately 25 % of polyester fibres 13 dtex, approximately 50 % of viscose fibres 8.9 dtex and approximately 15 % of melded fibres 4.4 dtex.

3. Use of a structured multi-layer surface-cleaning non-woven fabric according to one of the preceding claims, **characterised in that** the second fibre non-woven fabric component (2) forms a needled non-woven fabric which consists of a mixture of approximately 85 % of preferably coloured viscose fibres 1.7 dtex and approximately 15 % of melded fibres 4.4 dtex.

4. Use of a structured multi-layer surface-cleaning non-woven fabric according to one of the preceding claims, **characterised in that** the second fibre pile component (4) is shorter than the first fibre pile component.

5. Use of a structured multi-layer surface-cleaning non-woven fabric according to one of the preceding claims, **characterised in that** the height of the first fibre pile component (3) lies in the range from 5 mm to 7 mm and the second fibre pile component (4) lies in the range from 3 mm to 5 mm.

6. Use of a structured multi-layer surface-cleaning non-woven fabric according to one of the preceding claims, **characterised in that** the arrangement of the second fibre pile component (4) is effected in a regular, repeating pattern.

7. Use of a structured multi-layer surface-cleaning non-woven fabric according to one of the preceding claims, **characterised in that** the first and second fibre non-woven fabric component (1, 2) have different colours.

8. Use of a structured multi-layer surface-cleaning non-woven fabric according to one of the previous claims, **characterised in that** the fibre alignment of the fibre non-woven fabric components (1, 2) is essentially vertical to the fibre alignment of the fibre pile components (3, 4), wherein the fibres of the pile components are also anchored into the fibre non-woven fabric components by at least one end.

9. Use of a structured multi-layer surface-cleaning non-woven fabric for wet cleaning of surfaces, wherein the surface-cleaning non-woven fabric comprises at least two types of fibre non-woven fabric components (1, 2) which differ at least as regards their material composition and is produced according to a process comprising the following steps:
a) removal of a first fibre pile component (1) from a first fibre non-woven fabric component to form a first fibre pile component (3) which is formed from dirt-absorbing fibre parts which positively influence the gliding behaviour;
b) removal of a second fibre pile component (2) from a second fibre non-woven fabric component to form a second fibre pile component (4) which is formed from moisture-storing pile layer portions; wherein the removal of the various fibre types is effected by means of a needle-felting process.

10. Use of a structured multi-layer surface-cleaning non-woven fabric according to claim 9, **characterised in that** at least two needling machines arranged one behind another are used and the two fibre non-woven fabric components (1, 2) are removed one after another.

11. Use of a structured multi-layer surface-cleaning non-woven fabric according to claim 9, **characterised in that** a single needling machine is used, wherein the two fibre non-woven fabric components (1, 2) are removed at the same time.

12. Use of a structured multi-layer surface-cleaning non-woven fabric according to one of claims 9 to 11, **characterised in that** forked needles are used for removing the first fibre non-woven fabric component (1), wherein the width and the depth of the fork openings of the needles is about 0.05 mm, the puncture depth is about 7 mm and recess density is about 800 to 900 recesses per cm².

13. Use of a structured multi-layer surface-cleaning non-woven fabric according to one of claims 9 to 12, **characterised in that** crown needles having a puncture depth of about 3 mm to 5 mm, preferably 4 mm, are used for removing the second fibre non-woven fabric component (2).

14. Use of a structured multi-layer surface-cleaning non-woven fabric according to one of claims 9 to 13, **characterised in that** the surface-cleaning non-woven fabric is moved during the process at a feed rate of about 1.5 m/minute to 3.5 m/minute, preferably 2.5 m/minute, wherein the removed fibre parts of the first fibre non-woven fabric component (1) are temporarily fixed in their vertical position by a fibre-holding device, such as for example a brush tape, which is moved at the same feed rate.

## Revendications

1. Utilisation d'un tissu non tissé de nettoyage de surfaces, multicouche, structuré, pour le nettoyage humide de surfaces, le tissu non tissé de nettoyage de surfaces comprenant au moins deux types de composants de tissu non tissé à fibres (1, 2), se distinguant quant à leur composition de matériau, où
des parties de fibres, issues d'un premier composant de tissu non tissé à fibres (1), étant façonnées pour être sorties sensiblement perpendiculairement d'une surface du tissu non tissé de nettoyage de surfaces et constituent un premier composant à poils en fibres (3), et
des parties de fibres, issues d'un deuxième composant de tissu non tissé à fibres (2), étant également façonnées pour être sorties sensiblement perpendiculairement de la même surface et constituent un deuxième composant à poils en fibres (4),
**caractérisé en ce que**
le premier composant à poils en fibres (3) est constitué de parties de fibres captant les souillures et exerçant une influence positive sur le comportement en glissement, et
le deuxième composant à poils en fibres (4) est formé de proportions de couches de poils stockant l'humidité.

2. Utilisation d'un tissu non tissé de nettoyage de surfaces, multicouche, structuré selon la revendication 1, **caractérisé en ce que** le premier composant de tissu non tissé à fibres (1) forme un tissu non tissé aiguilleté, composé d'un mélange d'à peu près 25 % de fibres de polyester de 13 dtex, et d'à peu près 50 % de fibres de viscose de 8,9 dtex et d'à peu près 15 % de colle fusible de 4,4 dtex.

3. Utilisation d'un tissu non tissé de nettoyage de surfaces, multicouche, structuré, selon l'une des revendications précédentes, **caractérisé en ce que** le deuxième composant à poils en fibres (2) forme un tissu non tissé aiguilleté, composé d'un mélange d'à peu près 85 % de fibres de viscose, de préférence colorées, de 1,7 dtex, et d'à peu près 15 % de fibres de colle fusible de 4,4 dtex.

4. Utilisation d'un tissu non tissé de nettoyage de surfaces, multicouche, structuré, selon l'une des revendications précédentes, **caractérisé en ce que** le deuxième composant à poils en fibres (4) est plus court que le premier composant à poils en fibres.

5. Utilisation d'un tissu non tissé de nettoyage de surfaces, multicouche, structuré, selon l'une des revendications précédentes, **caractérisé en ce que** la hauteur du premier composant à poils en fibres (3) est dans la fourchette comprise entre 5 mm et 7 mm et celle du deuxième composant à poils en fibres (4) est dans la fourchette comprise entre 3 mm et 5 mm.

6. Utilisation d'un tissu non tissé de nettoyage de surfaces, multicouche, structuré, selon l'une des revendications précédentes, **caractérisé en ce que** l'agencement du deuxième composant à poils en fibres (4) s'effectue selon un motif répétitif, régulier.

7. Utilisation d'un tissu non tissé de nettoyage de surfaces, multicouche, structuré, selon l'une des revendications précédentes, **caractérisé en ce que** le premier et le deuxième composant de tissu non tissé à fibres (1, 2) présentent des couleurs différentes.

8. Utilisation d'un tissu non tissé de nettoyage de surfaces, multicouche, structuré, selon l'une des revendications précédentes, **caractérisé en ce que** l'orientation des fibres des composants de tissu non tissé à fibres (1 , 2) est sensiblement perpendiculaire à l'orientation des fibres des composants à poils en fibres (3, 4), les fibres des composants à poils étant encore ancrées, par au moins une extrémité, dans les composant de tissu non tissé à fibres.

9. Utilisation d'un tissu non tissé de nettoyage de surfaces, multicouche, structuré, pour le nettoyage humide de surfaces, le tissu non tissé de nettoyage de surfaces comprenant au moins deux types de composants de tissu non tissé à fibres (1, 2), se distinguant quant à leur composition de matériau, et étant fabriqué selon un procédé comprenant les étapes suivantes :
a) distribution d'un premier composant de tissu non tissé à fibres (1), pour constituer un premier composant à poils en fibres (3), constitué de parties de fibres captant les souillures et exerçant une influence positive sur le comportement en glissement ;
b) distribution d'un deuxième composant de tissu non tissé à fibres (2), pour constituer un deuxième composant à poils en fibres (4), formé de proportions de couches de poils stockant l'humidité ;
où
la distribution des différents types de fibres s'effectuant au moyen d'un procédé d'aiguilletage.

10. Utilisation d'un tissu non tissé de nettoyage de surfaces, multicouche, structuré, selon la revendication 9, **caractérisé en ce qu'**au moins deux machines à aiguilleter, disposées l'une derrière l'autre, sont mises en oeuvre, et les deux composants de tissu non tissé à fibres (1, 2) sont distribués l'un après l'autre.

11. Utilisation d'un tissu non tissé de nettoyage de surfaces, multicouche, structuré, selon la revendication 9, **caractérisé en ce qu'**une unique machine à aiguilleter est mise en oeuvre, les deux composants de tissu non tissé à fibres (1, 2) étant distribués simultanément.

12. Utilisation d'un tissu non tissé de nettoyage de surfaces, multicouche, structuré, selon l'une des revendications 9 à 11, **caractérisé en ce que** des aiguilles à fourche sont utilisées pour la distribution du premier composant de tissu non tissé à fibres (1), la largeur et la profondeur des ouvertures de fourche des aiguilles étant d'à peu près 0,05 mm, la profondeur de piquage traversant étant d'à peu près 7 mm et la densité de piquage étant d'à peu près 800 à 900 piquages par cm².

13. Utilisation d'un tissu non tissé de nettoyage de surfaces, multicouche, structuré, selon l'une des revendications 9 à 12, **caractérisé en ce que** des aiguilles à couronne, avec une profondeur de piquage traversant d'à peu près 3 mm à 5 mm, de préférence de 4 mm, sont utilisées pour la distribution du deuxième composant de tissu non tissé à fibres (2).

14. Utilisation d'un tissu non tissé de nettoyage de surfaces, multicouche, structuré, selon l'une des revendications 9 à 13, **caractérisé en ce que**, pendant la mise en oeuvre du procédé, le tissu non tissé de nettoyage de surfaces est avancé à une vitesse d'avancement d'à peu près 1,5 m/min à 3,5 m/min, de préférence 2,5 m/min, les parties de fibres distribuées du premier composant de tissu non tissé à fibres (1) étant fixées temporairement, dans leur position perpendiculaire, par un dispositif de maintien de fibres, tel que par exemple une bande à brosse, se déplaçant à la même vitesse d'avancement.
